# EUROPÄISCHE PATENTANMELDUNG

(11) **EP 3 772 795 A1**
(43) Veröffentlichungstag der Anmeldung: **10.02.2021**
(21) Anmeldenummer: 19190066.1
(22) Anmeldetag: 05.08.2019
(51) Int. Cl.: H02J 13/00

(54) **REGISTRIEREN EINES GERÄTS BEI EINER RECHENEINRICHTUNG**

(71) Anmelder: Siemens Aktiengesellschaft, 80333 München (DE)
(72) Erfinder: Bisale, Chaitanya, 90471 Nürnberg (DE); Fröhner, Wiebke, 92224 Amberg (DE); Vogl, Thomas, 91056 Erlangen (DE); Werner, Thomas, 91126 Rednitzhembach (DE)

(57) **Zusammenfassung**

Bereitgestellt ist ein Verfahren eines Registrierens (7) eines Gerätes (9) bei einer verbundenen Recheneinrichtung (11), aufweisend: Registrieren (23, 25) des Geräts bei der Recheneinrichtung unter Verwendung einer ersten Verschlüsselungsmethodik; Definieren, bei der Recheneinrichtung (11), einer nutzerspezifischen und gerätespezifischen zweiten Verschlüsselungsmethodik basierend auf Gerätidentifikationsdaten (16) und Nutzeridentifikationsdaten (18); Kommunizieren (31) der zweiten Verschlüsselungsmethodik von der Recheneinrichtung (11) an das Gerät (9) für zukünftige Kommunikation.

## Beschreibung

### GEBIET DER ERFINDUNG

Die vorliegende Erfindung betrifft ein Verfahren eines Registrierens eines Geräts bei einer in einem Kommunikationsnetzwerk verbundenen Recheneinrichtung, betrifft ferner ein Kommunikationssystem, welches ein Gerät und eine Recheneinrichtung aufweist und betrifft noch ferner ein Energieversorgungsnetzwerk, welches das Kommunikationssystem aufweist.

### STAND DER TECHNIK

Die Automatisierung von elektrischen Energieversorgungsnetzen nimmt in den letzten Jahren immer weiter zu. Während bisher Energieversorgungsnetze weitgehend nur im Hoch- und teilweise auch im Mittelspannungsbereich flächendeckend mit Automatisierungssystemen ausgestattet sind, nehmen in letzter Zeit die Bestrebungen zu, auch Verteilnetze auf Mittel- und Niederspannungsebene stärker zu automatisieren. Netzbetreiber versprechen sich davon insbesondere eine Reduzierung von Ausfallzeiten. Außerdem müssen bestehende Energieversorgungsnetze, insbesondere auch auf der Verteilebene, an eine stetig zunehmende Einspeisung elektrischer Energie durch dezentrale Erzeugungsanlagen (z.B. Windkraft, Photovoltaik, Biomassekraftwerke, etc.) ertüchtigt werden. Als Konsequenz ergeben sich Automatisierungssysteme, die sich vor allem dadurch auszeichnen, dass sie eine sehr große Anzahl von elektrischen Geräten, insbesondere Aktoren und Sensoren, umfassen, räumlich über große Flächen verteilt sind und eine große Anzahl von Daten sammeln.

Automatisierungslösungen, die nach einem klassischen Muster mit wenigen zentralen Leit- und Steuergeräten und daran angeschlossenen verteilten Automatisierungsgeräten bzw. Fernwirkgeräten aufgebaut sind, erfordern einen hohen Installations- und Parametrieraufwand. Aufgrund der großen Anzahl von Geräten in künftigen Automatisierungsanlagen stellt sich die Frage, wie das erforderliche Registrieren der Geräte möglichst fehlerfrei sowie einfach und aufwandsarm vorgenommen werden kann.

Das Dokument EP 3 070 556 A1 offenbart ein Verfahren, eine Recheneinrichtung und ein System zum Parametrieren eines elektrischen Gerätes, wobei von der Recheneinrichtung ein Parametrier-Programm zum Parametrieren des elektrischen Gerätes bereitgestellt wird und eine Parametrierung des elektrischen Gerätes durchgeführt wird.

Für einen Anbieter von Cloud-Diensten bzw. Kommunikationsnetzwerk-basierten Diensten, z.B. MindSphere, ist es für den erfolgreichen Aufbau eines Cloud-basierten Geschäftsmodells dringend erforderlich, den Anmeldeprozess bzw. Registrierprozess von Feldgeräten, insbesondere von Energie-Automatisierungsgeräten, so einfach wie möglich zu gestalten. Je einfacher dieser Anmeldeprozess bzw. Registrierprozess ist, desto eher gelingt es, den Käufer bzw. Nutzer des Gerätes an den Cloud-Dienst zu binden bzw. Cloud-Nutzer zum Kauf bestimmter, ausgewählter Geräte zu bewegen.

Zur Anmeldung bzw. Registrierung von Feldgeräten an einen spezifischen Cloud-Dienst wie z.B. MindSphere und EnergyIP müssen mehrere Arbeitsschritte vollzogen werden, bis das Gerät von, insbesondere mandantenspezifischen, Anwendungen benutzt werden kann, die in dem Cloud-System ablaufen.

Herkömmlicherweise muss zunächst das Gerät in die Lage versetzt werden, mit dem Cloud-System zu kommunizieren. Dazu kann die Kommunikationseinrichtung des Feldgerätes so vorkonfiguriert und parametrisiert werden, dass es die Kommunikation zur Cloud-Plattform aufbauen kann. Bereits diese erste Kommunikation muss gesichert erfolgen, weil die Feldgeräte häufig Bestandteil einer kritischen Infrastruktur sind. Nachdem die Kommunikation zum Cloud-Dienst aufgebaut wurde, muss das Gerät dem richtigen Nutzer bzw. Nutzergruppe (in dieser Anmeldung auch als Mandant bezeichnet) in dem Cloud-Dienst zugeordnet werden. Abschließend ist die Kommunikation so zu sichern, dass ausschließlich der Mandant des Cloud-Dienstes die Informationen lesen kann, die zwischen dem Cloud-Dienst und dem Energieautomatisierungsgerät ausgetauscht werden.

Herkömmlicherweise wurden Anmeldungsprozeduren für Feldgeräte von den Inbetriebsetzungstechnikern mit Hilfe von entsprechenden Konfigurations- und Parametrierwerkzeugen manuell bearbeitet. Diese herkömmliche Konfiguration und Parametrierung ist zeitaufwendig und erfordert von den Technikern ein gutes Verständnis der eingesetzten Informations- und Kommunikationstechnik. Ferner kann es dabei zu Fehlbedienungen kommen, die einen schnellen Einsatz des Feldgerätes erschweren.

Somit ist es eine Aufgabe der vorliegenden Erfindung, ein Verfahren eines Registrierens eines Gerätes bei einer Recheneinrichtung vorzuschlagen, welches schnell und sicher abläuft, einfach aufgebaut ist und Nachteile im Stand der Technik zumindest teilweise überwindet. Ferner ist es eine Aufgabe der vorliegenden Erfindung ein derartiges Verfahren vorzuschlagen, welches idealerweise mittels konventionell erhältlicher Hardware implementiert werden kann. Eine weitere Aufgabe der vorliegenden Erfindung ist es, ein entsprechendes Kommunikationssystem aus einem Gerät in einer Recheneinrichtung zu schaffen, welches ausgebildet ist, das Registrierungsverfahren auszuführen. Noch ferner ist es eine Aufgabe der vorliegenden Erfindung, ein Energieversorgungsnetzwerk vorzuschlagen, welches eine Registrierung bzw. Anmeldung von Feldgeräten vereinfacht und beschleunigt.

### ZUSAMMENFASSUNG DER ERFINDUNG

Die Aufgabe wird durch die Gegenstände der unabhängigen Ansprüche gelöst. Die abhängigen Ansprüche spezifizieren besondere Ausführungsformen der vorliegenden Erfindung.

Gemäß einer Ausführungsform der vorliegenden Erfindung ist ein Verfahren eines Registrierens eines Gerätes bei einer in einem Kommunikationsnetzwerk (z.B. Cloud-System) verbundenen Recheneinrichtung bereitgestellt, aufweisend Registrieren des Geräts bei der Recheneinrichtung unter Verwendung einer ersten Verschlüsselungsmethodik (z.B. Schlüsselpaar A mit Zertifikat A); Definieren, bei der Recheneinrichtung, einer nutzerspezifischen und gerätespezifischen zweiten Verschlüsselungsmethodik (z.B. Schlüsselpaar B mit Zertifikat B) basierend auf Gerätidentifikationsdaten und Nutzeridentifikationsdaten; Kommunizieren der zweiten Verschlüsselungsmethodik von der Recheneinrichtung an das Gerät für zukünftige Kommunikation.

Das Verfahren kann teilweise durch das Gerät und teilweise durch die Recheneinrichtung sowie Teile des Kommunikationsnetzwerkes durchgeführt werden. Bei dem Gerät kann es sich um ein elektrisches Gerät handeln, insbesondere ein Feldgerät, welches zur Überwachung, Steuerung oder Automatisierung einer Anlage, etwa eines Energieversorgungsnetzes vorgesehen ist. Das Kommunikationsnetz kann ein leitungsbasiertes oder drahtloses Kommunikationsnetzwerk umfassen. Das Kommunikationsnetzwerk kann verschiedene Topologien, etwa Ring-Topologie, Stern-Topologie oder ein Hybrid derselben aufweisen.

Die Recheneinrichtung kann beispielsweise als ein Computerserver oder ein Computersystem ausgebildet sein, mit einem arithmetisch-logischen Prozessor oder einer Reihe von arithmetisch-logischen Prozessoren. Die Recheneinrichtung kann Speichermöglichkeiten in Form eines elektronischen Speichers aufweisen. Insbesondere kann die Recheneinrichtung einen Speicherbereich aufweisen, welcher für eine Vielzahl von Nutzer in bestimmte Nutzungsbereiche Software- oder Hardwaremäßig geteilt sein kann.

Bei der Recheneinrichtung kann es sich um einen einzelnen oder eine Mehrzahl von Datenverarbeitungseinrichtungen (Computer, Server etc.) handeln, die in geeigneter Weise zur Durchführung des Parametrierprogramms zusammenwirken. Vorzugsweise besteht zwischen der Recheneinrichtung und dem elektrischen Gerät eine drahtgebundene oder eine drahtlose Kommunikationsverbindung. Diese kann dauerhaft vorhanden sein oder bedarfsweise aufgebaut werden. Die Recheneinrichtung kann zudem eine Schnittstelle zu einer Bedien- und Beobachtungsstation (z.B. einem Computer in einer Leitstelle, einem mobilen Computer, einem Smartphone oder einer Workstation) aufweisen, um auf das elektrische Gerät bezogene und/oder von diesem gelieferte Daten dem Betreiber des elektrischen Gerätes darstellen zu können.

Das Registrieren des Gerätes kann auch als ein Anmelden des Gerätes bei der Recheneinrichtung aufgefasst werden, wobei die Recheneinrichtung über die Anwesenheit des Gerätes informiert wird und insbesondere Geräteidentifikationsdaten zur Identifikation des Gerätes empfangen kann. Aufgrund der Geräteidentifikationsdaten kann die Recheneinrichtung (beispielsweise durch Abfrage in einer Datenbank) feststellen, welcher Art das Gerät ist und welche Funktionen das Gerät ausführen kann. Auch kann ein für das Gerät verständlicher Befehlssatz von der Recheneinrichtung z.B. von dem Gerät selbst oder aus einer Datenbank aufgrund der Geräteidentifikationsdaten abgerufen werden.

Das Gerät kann im Zuge einer Herstellung bzw. Konfiguration vor der Registrierung mit Nutzeridentifikationsdaten ausgestattet worden sein, muss jedoch nicht mit den Nutzeridentifikationsdaten ausgestattet sein, wenn es sich erstmals bei der Recheneinrichtung registriert. Nutzeridentifikationsdaten können durch weitere optionale Schritte des Verfahrens an die Recheneinrichtung übermittelt werden.

Die erste Verschlüsselungsmethodik kann durch ein bestimmtes (symmetrisches oder asymmetrisches) Verschlüsselungsverfahren und ein oder mehrere Schlüssel, z.B. öffentliche Schlüssel und private Schlüssel definiert sein. Die Verschlüsselungsmethodik ermöglicht ein verschlüsseltes und integritätsgeschütztes Übertragen von Daten zwischen dem Gerät und der Recheneinrichtung während des Registrierungsprozesses. Nachdem jedoch die zweite Verschlüsselungsmethodik definiert und von der Recheneinrichtung an das Geräts für zukünftige Kommunikation kommuniziert und/oder parametriert worden ist, kann das Gerät und auch die Recheneinrichtung veranlasst werden, miteinander ausschließlich unter Zuhilfenahme der zweiten Verschlüsselungsmethodik zu kommunizieren. Die zweite Verschlüsselungsmethodik kann durch ein gleiches oder durch ein anderes Verschlüsselungsverfahren und durch andere Schlüssel oder andere Schlüsselpaar(e) mit anderen Zertifikaten definiert sein. Das Kommunizieren kann z.B. über FTP, http, SSL/TLS oder andere Kommunikationstechniken erfolgen. Das Kommunizieren kann drahtgebunden oder drahtlos erfolgen. Auch sind Mischformen zwischen drahtlosem und drahtgebundenem Übertragen möglich.

Elektrische Geräte können in diesem Zusammenhang insbesondere Geräte einer Automatisierungsanlage, z.B. Sensoren, Aktoren, Fehleranzeiger, Messgeräte, Schutzgeräte, Steuergeräte oder Kommunikationseinrichtungen (Router, Switche, Hubs, Bridges), sein. Die Automatisierungsanlage kann dabei zur Steuerung, Beobachtung, Überwachung, zum Schutz und/oder zur Regelung von industriellen Prozessen und Anlagen, Produktions- und Fertigungsanlagen, öffentlichen und privaten Einrichtungen (z.B. Gebäude, Verkehrssysteme) oder Verteil- bzw. Transportsystemen (z.B. für elektrische Energie, Feststoffe, Öl, Gas, Wasser, Luft etc.) dienen. Daneben können aber auch beliebige andere elektrische Geräte, z.B. Geräte aus dem Konsumentenbereich, Gegenstand einer Parametrierung sein. Nachfolgend wird die Erfindung am Beispiel einer Automatisierungsanlage für eine elektrische Anlage erläutert, wie z.B. ein elektrisches Energieversorgungsnetz oder eine elektrische Schaltstation in einem Energieversorgungsnetz. Eine solche elektrische Anlage kann einzelne Komponenten, beispielsweise in Form von Leitungen und Kabeln, Schaltern, Transformatoren, Generatoren, Motoren, Umrichtern, Lasten, elektrischen Energieerzeugern etc. umfassen. Elektrische Geräte in einer solchen Automatisierungsanlage können üblicherweise in räumlicher Nähe zu einzelnen Komponenten der elektrischen Anlage angeordnet sein und können beispielsweise dazu dienen , Messwerte zu erfassen, die einen Zustand der jeweiligen Komponenten der Anlage beschreiben, oder Zustände jeweiliger Komponenten der Anlage zu beeinflussen. In diesem Zusammenhang können die elektrischen Geräte beispielsweise Sensoren, z.B. Sensoren zur Messung elektrischer Größen (z.B. Strom, Spannung), Temperatursensoren, Durchflusssensoren, Strömungssensoren etc., oder Aktoren, z.B. Stellglieder, Schaltersteuerungen, Ventile etc., sein. Elektrische Geräte können darüber hinaus auch intelligente Geräte (z.B. sogenannte IEDs - intelligent electronic devices) sein, die unter Ausführung bestimmter Algorithmen selbständig Aufgaben zur Automatisierung der Anlage wahrnehmen (z.B. sogenannte Fehlerindikatoren, die einen in einer Leitung fließenden Strom messen und bei Überschreitung eines Schwellenwertes ein Alarmsignal abgeben). IEDs können in diesem Zusammenhang insbesondere Schutz- und Steuergeräte, Messgeräte, Power Quality Geräte oder Leistungsmessgeräte (Power Meter) sein. Elektrische Geräte in einer solchen Automatisierungsanlage könne zudem auch Kommunikationsgeräte (Router, Switche, etc.) sein, die zur Übertragung von Nachrichten in einem Kommunikationssystem der Automatisierungsanlage dienen.

Nachdem das Gerät bei der Recheneinrichtung angemeldet ist und die zweite Verschlüsselungsmethodik an das Gerät kommuniziert und/oder parametriert worden ist, können z.B. Steuerbefehle oder Konfigurationsbefehle von der Recheneinrichtung an das Gerät unter Benutzung der zweiten Verschlüsselungsmethodik übermittelt werden. Ähnlich können von dem Gerät erzeugte Messdaten oder Überwachungsdaten unter Benutzung der zweiten Verschlüsselungsmethodik von dem Gerät an die Recheneinrichtung übermittelt werden. Die zweite Verschlüsselungsmethodik kann somit die Art der Verschlüsselung in beiden Richtungen zwischen dem Gerät und der Recheneinrichtung definieren. Der autorisierte Nutzer (z.B. ein Benutzer oder ein automatisierter Dienst), welcher durch die Nutzeridentifikationsdaten identifiziert ist, kann über die Recheneinrichtung mit dem Gerät unter Benutzung ebenfalls der zweiten Verschlüsselungsmethodik kommunizieren. Da zur erfolgreichen Durchführung der zweiten Verschlüsselungsmethodik entsprechende Schlüssel bekannt sein müssen, können nicht autorisierte Nutzer an einer Kommunikation mit dem Gerät über die Recheneinrichtung gehindert sein. Damit kann eine gesicherte Kommunikation nur mit autorisierten Nutzern zu dem Gerät aufgebaut und unterhalten werden.

Gemäß einer Ausführungsform der vorliegenden Erfindung weist das Verfahren ferner auf falls beim Registrieren keine Nutzeridentifikationsdaten von dem Gerät an die Recheneinrichtung übertragen wurde, Verhindern jeder Kommunikation eines jeglichen Nutzers mit dem Gerät über die Recheneinrichtung. Da die Kommunikation mit dem Gerät von Seiten des Geräts und auch von Seiten der Recheneinrichtung lediglich unter Zuhilfenahme der zweiten Verschlüsselungsmethodik durchgeführt wird, ist ein jeglicher Nutzer, welcher die Details der zweiten Verschlüsselungsmethodik, insbesondere den oder die Schlüssel, nicht kennt, von einer Kommunikation mit dem Gerät ausgeschlossen. Damit kann sichergestellt werden, dass nur der autorisierte Nutzer (oder eine autorisierte Nutzergruppe) mit dem ihr zugeordneten Gerät kommunizieren kann. Nur der autorisierte Benutzer (oder eine autorisierte Nutzergruppe) kann über den oder die entsprechenden Schlüssel und Einzelheiten des verwendeten Verschlüsselungsverfahrens verfügen, um auf die Daten des ihm zugeordneten Gerätes zugreifen zu können.

Gemäß einer Ausführungsform der vorliegenden Erfindung umfasst das Registrieren ein Übertragen von Geräteidentifikationsdaten, die das Gerät identifizieren, von dem Gerät an die Recheneinrichtung. Bei der Geräteidentifikationsinformation kann es sich beispielsweise um eine Gerätebezeichnung, eine Seriennummer, einen Gerätetyp etc. handeln. Die Geräteidentifikationsdaten können direkt von dem Gerät an die Recheneinrichtung übertragen oder übermittelt werden. In anderen Ausführungsformen kann eine Benutzereinheit, z.B. ein mobiles Gerät, die Geräteinformationsdaten an die Recheneinrichtung übertragen. Die Benutzereinheit kann z.B. mittels eines optischen Sensors einen Identifikationscode erfassen, der bei dem elektrischen Gerät angebracht ist. Mittels der Geräteidentifikationsdaten kann eine gerätespezifische Verschlüsselung, d.h. die zweite Verschlüsselungsmethodik definiert werden.

Gemäß einer Ausführungsform der vorliegenden Erfindung weist das Verfahren ferner auf Erfassen, bei dem Gerät, der Gerätidentifikationsdaten, die das Gerät identifizieren; Übermitteln der Gerätidentifikationsdaten zusammen mit Nutzeridentifikationsdaten, die einen autorisierten Nutzer identifizieren, an die Recheneinrichtung.

Die Geräteidentifikationsdaten können z.B. von einer Benutzereinheit, z.B. einem mobilen Gerät, erfasst werden. Die Benutzereinheit kann auch verwendet werden, um die Geräteinformationsdaten zusammen mit Nutzeridentifikationsdaten an die Recheneinrichtung zu übermitteln. Die Benutzereinheit kann dazu Nutzeridentifikationsdaten auf einem Speicher gespeichert haben. Wenn die Geräteidentifikationsdaten zusammen mit den Nutzeridentifikationsdaten an die Recheneinrichtung übermittelt werden, kann eine sichere Zuordnung des Gerätes zu einem Benutzer bzw. einer Benutzergruppe durchgeführt werden und die zweite Verschlüsselungsmethodik kann benutzerspezifisch und gerätespezifisch definiert werden. Nutzerspezifisch und gerätespezifisch kann bedeuten, dass die zweite Verschlüsselungsmethodik sowohl von den Nutzeridentifikationsdaten als auch von den Geräteidentifikationsdaten abhängt und dass beispielsweise Nutzeridentifikationsdaten, die einen anderen Nutzer identifizieren, zu einer anderen Verschlüsselungsmethodik führen. Auch können Geräteidentifikationsdaten, die ein anderes Gerät identifizieren, zu einer anderen Verschlüsselungsmethodik als der zweiten Verschlüsselungsmethodik führen.

Gemäß einer Ausführungsform der vorliegenden Erfindung umfasst das Erfassen der Geräteidentifikationsdaten ein Abtasten eines an dem Gerät angebrachten Codes, insbesondere QR-Codes. Damit können herkömmliche Codes vorteilhaft in dem Verfahren verwendet werden. Scanner oder Abtaster derartiger Codes sind herkömmlich verfügbar.

Gemäß einer Ausführungsform der vorliegenden Erfindung werden die Geräteidentifikationsdaten von einer Benutzereinheit, insbesondere einem mobilen Gerät, ferner insbesondere Smart-Mobiltelefon, erfasst, und zusammen mit dem Nutzeridentifikationsdaten, die insbesondere auf der Benutzereinheit gespeichert sind, an die Recheneinrichtung übermittelt. Die Benutzereinheit kann insbesondere von einem von dem autorisierten Nutzer beauftragten Mitarbeiter getragen werden und kann zu dem Gerät gebracht werden, um die Geräteidentifikationsdaten von dem Gerät zu erfassen (z.B. mittels einer Kamera und einer Bildverarbeitungs-Software). In anderen Ausführungsformen kann z.B. ein Roboter oder unbemanntes Fahrzeug zu dem Gerät bewegt werden, die Geräteidentifikationsdaten aufnehmen und zusammen mit den Nutzeridentifikationsdaten an die Recheneinrichtung übermitteln.

Gemäß einer Ausführungsform der vorliegenden Erfindung weist das Verfahren ferner auf Ermöglichen einer Kommunikation des autorisierten Nutzers mit dem Gerät über die Recheneinrichtung unter Benutzung der zweiten Verschlüsselungsmethodik; Verhindern jeder Kommunikation eines von dem autorisierten Nutzer verschiedenen Nutzers mit dem Gerät über die Recheneinrichtung.

Jegliche Kommunikation mit einer von der zweiten Verschlüsselungsmethodik verschiedenen Verschlüsselungsmethodik kann zwischen dem autorisierten oder irgendeinem anderen Nutzer und dem Gerät über die Recheneinrichtung verhindert sein. Der autorisierte Nutzer kommuniziert nicht direkt mit dem Gerät, ohne die Recheneinrichtung zu involvieren, sondern nur über die Recheneinrichtung. Zum Senden von Daten an das Gerät sendet der autorisierte Nutzer diese Daten (oder davon abgeleitete Daten) an die Recheneinrichtung, welche die Daten (oder abgeleitete Daten) an das Gerät weiterleitet. Zum Empfangen von Daten von dem Gerät, sendet das Gerät Daten an die Recheneinrichtung, welche die Daten (oder davon abgeleitete Daten) an den autorisierten Nutzer weiterleitet. Zur Kommunikation kann der autorisierte Nutzer ein entsprechendes Kommunikationsgerät, z.B. einen Computer oder Smartphone, verwenden. Die zweite Verschlüsselungsmethodik kann nur dem autorisierten Nutzer und dem Gerät bekannt sein. Anderen Nutzern oder anderen Geräten braucht die zweite Verschlüsselungsmethodik (oder jedenfalls ein entsprechender Schlüssel oder Schlüsselpaar) nicht bekannt sein.

Die Recheneinrichtung kann dem Gerät und dem autorisierten Nutzer einen zugeordneten Speicherbereich bereitstellen, auf den das Gerät als auch der autorisierte Nutzer zum Lesen und/oder Schreiben zugreifen können. Der dem autorisierten Nutzer und dem Gerät zugeordnete Speicherbereich kann auch Software entfalten, welche z.B. zum Steuern oder Konfigurieren des Gerätes verwendet werden kann. In dem reservierten Speicherbereich, welcher dem Gerät und dem autorisierten Nutzer zugeordnet ist, können auch beispielsweise in der Vergangenheit von dem Gerät erfasste Daten oder in der Vergangenheit von dem autorisierten Nutzer abgesetzte Befehle gespeichert werden. Dementsprechend kann auch jede Kommunikation eines von dem autorisierten Nutzer verschiedenen Nutzers, welche auf den für das Gerät und den Nutzer reservierten Speicherbereich zugreifen möchte, verhindert sein. Damit kann eine Datensicherheit erreicht werden.

Gemäß einer Ausführungsform der vorliegenden Erfindung umfasst das Ermöglichen der Kommunikation des autorisierten Benutzers mit dem Gerät über die Recheneinrichtung: Konfigurieren des Gerätes, künftig ausschließlich unter Benutzung der zweiten Verschlüsselungsmethodik mit der Recheneinrichtung und/oder dem autorisierten Nutzer zu kommunizieren.

Das Gerät kann über eine Kommunikationsschnittstelle oder über ein Kommunikationsmodul verfügen, welches konfigurierbar ist. Das Konfigurieren des Gerätes kann z.B. einen Austausch eines ersten Schlüssel(paar)s und das entsprechende Zertifikat mit einem zweiten Schlüssel(paar) und das entsprechende Zertifikat umfassen. Die erste Verschlüsselungsmethodik und/oder die zweite Verschlüsselungsmethodik können z.B. ein asymmetrisches Verschlüsselungsverfahren umfassen, wobei jeweils öffentliche Schlüssel zwischen dem Gerät und dem autorisierten Nutzer bzw. zwischen dem Gerät und der Recheneinrichtung ausgetauscht werden. Das Gerät kann z.B. Daten nach Verschlüsselung mit dem öffentlichen Schlüssel der Recheneinrichtung an die Recheneinrichtung verschicken, woraufhin die Recheneinrichtung diese mit ihren öffentlichen verschlüsselten Daten mit dem privaten Schlüssel der Recheneinrichtung entschlüsseln kann. Die Recheneinrichtung kann z.B. Daten, die mit dem öffentlichen Schlüssel des Gerätes verschlüsselt sind, an das Gerät senden, welches diese verschlüsselten Daten mithilfe des privaten Schlüssels des Gerätes entschlüsseln kann. Ebenso können zwischen der Recheneinrichtung und dem autorisierten Nutzer öffentliche Schlüssel, die gemäß der zweiten Verschlüsselungsmethodik zu verwenden sind, ausgetauscht worden sein.

Die erste Verschlüsselungsmethodik und/oder die zweite Verschlüsselungsmethodik können somit durch jeweils vier Schlüsselpaare definiert sein. Jeweils zwei Schlüsselpaare können die Kommunikation zwischen dem Gerät und der Recheneinrichtung definieren. Zwei andere Schlüsselpaare können die Kommunikation zwischen dem autorisierten Nutzer und der Recheneinrichtung definieren.

Gemäß einer Ausführung der vorliegenden Erfindung weist das Verfahren vor dem Registrieren auf Vorbereiten des Gerätes zur verschlüsselten Kommunikation mit der Recheneinrichtung einschließlich Ausstatten des Gerätes mit der ersten Verschlüsselungsmethodik (z.B. mit Zertifikat A). Das Ausstatten des Gerätes mit der ersten Verschlüsselungsmethodik kann z.B. ein Speichern eines gerätintern erzeugten oder importierten Schlüsselpaares (öffentlicher Schlüssel der Recheneinrichtung und privater Schlüssel des Gerätes) und das Speichern des entsprechenden signierten Zertifikats, insbesondere Zertifikat A, umfassen. Zertifikat A kann von der Zertifizierungsstelle des Gerätherstellers signiert sein. Somit kann diese Vorbereitung vor Inbetriebnahme des Geräts im Feld vorgenommen werden. Somit braucht das Gerät nicht mit der Recheneinrichtung zu kommunizieren, um Kenntnis über die erste Verschlüsselungsmethodik zu erhalten. Damit kann der Registrierprozess bzw. Anmeldeprozess weiter vereinfacht und beschleunigt werden.

Gemäß einer Ausführungsform der vorliegenden Erfindung umfasst das Vorbereiten des Gerätes ferner: Hinterlegen der Nutzeridentifikationsdaten auf dem Gerät, die einen autorisierten Nutzer oder eine autorisierte Nutzergruppe identifizieren, wobei das Registrieren eine Übertragung der Nutzeridentifikationsdaten von dem Gerät an die Recheneinrichtung umfasst. Wenn bereits bei Vorbereitung des Geräts die Nutzeridentifikationsdaten auf dem Gerät hinterlegt werden, insbesondere gespeichert werden, kann das Gerät ohne weitere Verfahrensschritte bereits dem autorisierten Nutzer zugeordnet werden. Somit kann das Gerät schneller dem für den entsprechenden autorisierten Benutzer reservierten Speicherbereich innerhalb der Recheneinrichtung (oder innerhalb des Kommunikationsnetzwerkes) zugeordnet werden.

Gemäß einer Ausführungsform der vorliegenden Erfindung verwenden die erste Verschlüsselungsmethodik und die zweite Verschlüsselungsmethodik beide dasselbe, insbesondere symmetrische oder asymmetrische, Verschlüsselungsverfahren, jedoch verschiedene Schlüssel und/oder ein erstes Zertifikat bzw. ein zweites Zertifikat.

Zertifikat A ist z.B. das Geräthersteller Zertifikat, welches von der Geräthersteller-Zertifizierungsstelle signiert und somit legitimiert worden ist. Es enthält z.B. mindestens die Kern-Gerätidentifikationsdaten wie Seriennummer, etc., und auch den öffentlichen Schlüssel des Gerät-Schlüsselpaars. Der entsprechende private Schlüssel ist z.B. im Gerät sicher aufbewahrt und nie an externen Teilnehmer jeglicher Art bekanntgegeben.

Mit dem Zertifikat A kann sich das Gerät z.B. bei der Recheneinrichtung identifizieren. Eine Voraussetzung dafür ist z.B., dass die Geräthersteller-Zertifizierungsstelle bei der Recheneinrichtung vorab als vertrauenswürdig parametriert worden ist. Somit kann die Recheneinrichtung während einer Verbindungsanfrage des Gerätes prüfen, ob die Anfrage von einem vertrauenswürdigen Gerät stammt, sprich ob das bei Verbindungsaufbau empfangene Gerätezertifikat z.B. von einer vertrauenswürdigen Zertifizierungsstelle signiert worden ist.

Nach dem erfolgreichen Verbindungsaufbau des Gerätes mit der Recheneinrichtung oder nach der erfolgreichen Einordnung des Gerätes zum Quarantänebereich seitens Recheneinrichtung, haben das Zertifikat A und die dazu zugehörige Schlüssel ihren Zweck erfüllt. Nun kann die Recheneinrichtung das Gerät mit einem neuen Schlüsselpaar und dem entsprechendem Zertifikat, "Zertifikat B", welches von der Nutzer gehörigen Zertifizierungsstelle signiert ist, initialisieren und kann dem Gerät somit Zugriff auf den Nutzer-spezifischen Speicherbereich über die dort laufenden Nutzer-spezifischen Diensten erlauben. Ab diesem Zeitpunkt identifiziert sich das Gerät z.B. ausschließlich mittels Zertifikat B an der Recheneinrichtung.

Wenn dasselbe Verschlüsselungsverfahren verwendet wird, kann ein Umschalten von der ersten Verschlüsselungsmethodik auf die zweite Verschlüsselungsmethodik in einfacher und schneller Weise durchgeführt werden. Insbesondere kann für die erste Verschlüsselungsmethodik und die zweite Verschlüsselungsmethodik dieselbe Software ablaufen, was den Implementierungsbedarf reduzieren kann.

Gemäß einer Ausführungsform der vorliegenden Erfindung umfasst das Verfahren nach dem Registrieren ferner Parametrieren und/oder Konfigurieren des Gerätes unter Benutzung der zweiten Verschlüsselungsmethodik von der Recheneinrichtung aus, insbesondere in Zusammenwirken mit dem mobilen Gerät. Die Parametrierung und/oder Konfiguration des Gerätes kann das Gerät für anwendungsspezifische Aufgaben einstellen, z.B. hinsichtlich eines Messens von physikalischen Größen, etwa Strom, Spannung oder hinsichtlich eines Steuerns von Komponenten des Geräts, etwa Schalter, Transformatoren, Konverter, etc. Das Parametrieren bzw. Konfigurieren kann auch den Austausch von Steuer- oder Mess-Software umfassen, die auf die gewünschte Anwendung zugeschnitten ist.

Gemäß einer Ausführungsform der vorliegenden Erfindung umfasst das Gerät ein Feldgerät, insbesondere eines der folgenden: einen Sensor, einen Aktor, einen Aktuator, ein Messgerät, ein Schutzgerät, ein Steuergerät, ein Kommunikationsgerät, einen Schalter. Damit kann eine Anlage bzw. eine Industrieanlage vorteilhafterweise überwacht und/oder gesteuert und/oder automatisiert werden. Das Gerät kann ein Kommunikationsmodul aufweisen, welches zum Durchführen von einer oder mehreren Verschlüsselungskommunikationstechniken ausgebildet ist. Das Kommunikationsmodul kann konfiguriert werden, gemäß der ersten oder der zweiten Kommunikations- bzw. Verschlüsselungsmethodik mit der Recheneinrichtung zu kommunizieren.

Gemäß einer Ausführungsform der vorliegenden Erfindung sind das Kommunikationsnetzwerk und/oder die Recheneinrichtung zur Steuerung und/oder Überwachung und/oder Automatisierung eines elektrischen Energieversorgungsnetzwerkes ausgebildet.

Es sollte verstanden werden, dass Merkmale, welche individuell oder in irgendeiner Kombination im Zusammenhang mit einem Verfahren eines Registrierens eines Gerätes bei einer Recheneinrichtung beschrieben, erläutert oder eingesetzt wurden, ebenso, individuell oder in irgendeiner Kombination, auf ein Kommunikationssystem anwendbar sind, gemäß Ausführungsformen der vorliegenden Erfindung oder umgekehrt.

Gemäß einer Ausführungsform der vorliegenden Erfindung ist ein Kommunikationssystem bereitgestellt, aufweisend ein Gerät; und eine Recheneinrichtung, die mit dem Gerät über ein Kommunikationsnetzwerk verbunden ist, wobei das Gerät ausgebildet ist, sich bei der Recheneinrichtung unter Verwendung einer ersten Verschlüsselungsmethodik (z.B. Zertifikat A) zu registrieren; wobei die Recheneinrichtung ausgebildet ist, eine nutzerspezifische und gerätespezifische zweite Verschlüsselungsmethodik (z.B. Zertifikat B) basierend auf Gerätidentifikationsdaten und Nutzeridentifikationsdaten zu definieren; und die zweite Verschlüsselungsmethodik für zukünftige Kommunikation an das Gerät zu kommunizieren. Das Kommunikationssystem kann insbesondere ausgebildet sein, ein Verfahren eines Registrierens eines Gerätes bei einer Recheneinrichtung gemäß einer Ausführungsform der vorliegenden Erfindung auszuführen.

Gemäß einer Ausführungsform der vorliegenden Erfindung weist das Kommunikationssystem ferner eine mobile Benutzereinheit auf, insbesondere Smart-Mobiltelefon, die ausgebildet ist, Gerätidentifikationsdaten des Gerätes zu erfassen und zusammen mit Nutzeridentifikationsdaten an die Recheneinrichtung zu übermitteln. Bei der Benutzereinheit kann es sich beispielsweise um einen tragbaren Computer (Notebook, Laptop, Tablet, PDA, etc.) oder ein mobiles Kommunikationsgerät (Mobiltelefon, Smartphone, etc.) handeln. Die Benutzereinheit kann jedoch auch eine stationäre Datenverarbeitungseinrichtung z.B. eine Workstation sein.

Ferner ist ein Energieversorgungsnetzwerk bereitgestellt, aufweisend: ein Kommunikationssystem gemäß einer der vorangehenden Ausführungsformen und ein Starkstromnetzwerk zur Energieversorgung mehrerer Konsumenten, wobei das Gerät des Systems zur Steuerung und/oder Überwachung und/oder Automatisierung mit dem Starkstromnetzwerk verbunden ist.

Ausführungsformen der vorliegenden Erfindung werden nun mit Bezug auf die beiden Zeichnungen erläutert. Die Erfindung ist nicht auf die illustrierten oder beschriebenen Ausführungsformen beschränkt.

### KURZE BESCHREIBUNG DER ZEICHNUNGEN

Fig. 1 illustriert in schematischer Weise ein Ablaufdiagramm eines Verfahrens eines Registrierens eines Gerätes bei einer Recheneinrichtung gemäß einer Ausführungsform der vorliegenden Erfindung; und
Fig. 2 illustriert schematisch ein System gemäß einer Ausführungsform der vorliegenden Erfindung, welches ausgebildet ist, das in Fig. 1 illustrierte Verfahren auszuführen.

### DETAILLIERTE BESCHREIBUNG VON AUSFÜHRUNGSFORMEN

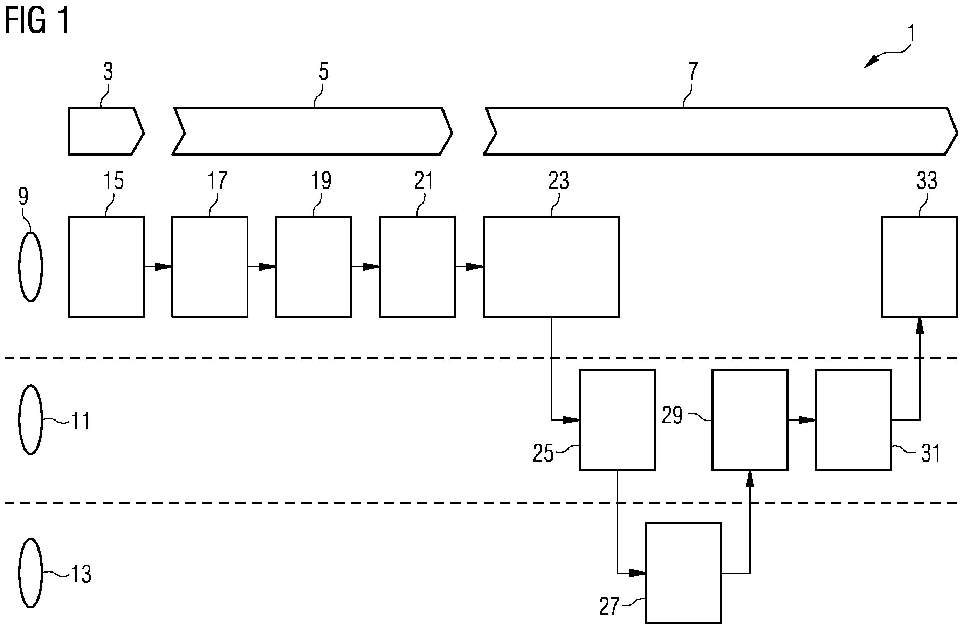

Das in Fig. 1 in schematischer Weise illustrierte Ablaufdiagramm 1 eines Verfahrens eines Registrierens eines Gerätes bei einer Recheneinrichtung gemäß einer Ausführungsform der vorliegenden Erfindung illustriert einen Abschnitt 3 einer Fertigung eines Feldgerätes, einen Abschnitt 5 einer Vorbereitung der Inbetriebsetzung des Gerätes (z.B. im Werk bei einem Value-Added-Reseller, etc.) und illustriert einen Zeitabschnitt 7 einer Inbetriebsetzung des Feldgerätes (z.B. im Feld). Die Abschnitte 3, 5, 7 laufen zeitlich hintereinander ab. Unterhalb der Abschnitte 3, 5, 7 sind jeweils die Verfahrensschritte illustriert, welche von einem Feldgerät 9, von einer Recheneinrichtung 11 (bzw. Cloud-Dienst) bzw. von einer Benutzereinheit 13 (z.B. mobiles Gerät) ausgeführt werden. Zunächst wird das Feldgerät 9 in dem Block 15 gefertigt, welcher innerhalb des Fertigungsabschnitts 3 erfolgt. Im Abschnitt 5 der Vorbereitung der Inbetriebsetzung erfolgen die Verfahrensschritte 17, 19 und 21. In dem Verfahrensschritt 17 wird eine Konfiguration und Parametrierung zur Kommunikation mit der Recheneinrichtung 11 (bzw. mit dem Cloud-Dienst) bei dem Feldgerät 9 durchgeführt. In dem darauffolgenden Verfahrensschritt 19 wird das Gerät 9 mit einer ersten Verschlüsselungsmethodik bzw. mit einem generellen (z.B. durch Geräthersteller signierten) Zertifikat A einschließlich des zugehörigen Schlüsselpaars ausgerüstet. In einem optionalen Verfahrensschritt 21 wird das Gerät mit Daten ausgestattet, die später eine Zuweisung zu einem autorisierten Nutzer (bzw. Mandanten) ermöglichen.

In dem Abschnitt 7 der Inbetriebsetzung führen sowohl das Feldgerät als auch die Recheneinrichtung 11 als auch die Benutzereinheit 13 zumindest einen Verfahrensschritt durch. In dem Verfahrensschritt 23 wird beim Anlauf des Feldgerätes Kommunikation zu der Recheneinrichtung 11 bzw. dem Cloud-Dienst aufgebaut. Zur sicheren Datenübertragung bzw. Kommunikation wird dazu die erste Verschlüsselungsmethodik bzw. das generelle Zertifikat "A" genutzt. Der von der Recheneinrichtung 11 durchgeführte Verfahrensschritt 25 umfasst, dass die Recheneinrichtung 11 die Kommunikation mit dem Feldgerät 9 akzeptiert und ein das Feldgerät 9 betreffendes Datenobjekt des Gerätes in einem Quarantänebereich ablegt. Der Quarantänebereich bezeichnet einen Speicherbereich der Recheneinrichtung 11, auf den von außen von keinem Nutzer zugegriffen werden kann. Dies erfolgt jedoch nur dann, wenn der optionale Verfahrensschritt 21 tatsächlich ausgelassen wurde und das Gerät zu diesem Zeitpunkt keinem autorisierten Nutzer zugeordnet werden kann. Im Falle, dass der optionale Verfahrensschritt 21 doch ausgeführt wurde, wird ein nicht illustrierter Verfahrensschritt durchgeführt, wobei das das Feldgerät 9 betreffende Datenobjekt in einem dem entsprechenden autorisierten Nutzer zugeordneten Speicherbereich abgelegt wird. Auf diesen dem autorisierten Benutzer zugeordneten Speicherbereich kann sowohl das Gerät 11 als auch der jeweilige autorisierte Nutzer bzw. Nutzergruppe zugreifen, um z.B. das Gerät zu steuern oder Daten von ihm zu erhalten.

Ist jedoch der optionale Verfahrensschritt 21 nicht durchgeführt worden, so wird in einem Verfahrensschritt 27 von einer Benutzereinheit 13 das Kennzeichen des Feldgerätes aufgenommen, insbesondere Geräteidentifikationsdaten bestimmt. Ferner werden diese Geräteidentifikationsinformationen mit einem Zertifikat der Benutzereinheit 13 verschlüsselt und an die Recheneinrichtung 11 bzw. den Cloud-Dienst gesendet. Daraufhin entschlüsselt die Recheneinrichtung 11 in einem nachfolgenden Verfahrensschritt 29 die von der Benutzereinheit 13 empfangenen Daten und schiebt das das Feldgerät 9 betreffende Datenobjekt in den für den autorisierten Nutzer vorbestimmten Speicherbereich innerhalb der Recheneinrichtung 11. Das Gerät 9 ist nun einem eindeutigen autorisierten Benutzer zugeordnet und kann von dem autorisierten Nutzer kontaktiert werden, um beispielsweise Daten abzurufen oder Steuerbefehle zu senden. Zur Kommunikation zwischen dem Gerät 9 und dem autorisierten Nutzer veranlasst die Recheneinrichtung in einem Verfahrensschritt 31 die Übertragung einer benutzerspezifischen zweiten Verschlüsselungsmethodik bzw. eines benutzerspezifischen (z.B. durch Nutzer-Zertifizierungsstelle signierten) Zertifikats B an das Feldgerät 9. In diesem Übertragungsschritt des Zertifikats B muss entweder auch das entsprechende Schlüsselpaar an das Gerät übertragen werden, oder kann das Schlüsselpaar auch im Gerät unter Führung der Recheneinrichtung direkt erzeugt werden. Im letzteren Fall wird auch das Zertifikat B zuerst im Gerät erzeugt und an die Recheneinrichtung zur Signierung weitergeleitet, sodass das Zertifikat B von der Nutzer-Zertifizierungsstelle signiert und zurückgeschickt wird.

In dem darauffolgenden Verfahrensschritt 33 wird das Feldgerät 9 konfiguriert, zukünftig für Kommunikation mit der Recheneinheit 11 und/oder dem autorisierten Benutzer die zweite Verschlüsselungsmethodik zu verwenden. Insbesondere kann das Feldgerät das bisherige Zertifikat A und das entsprechende Schlüsselpaar gegen das Zertifikat B und das entsprechende Schlüsselpaar austauschen, um die zukünftige Kommunikation unter Zuhilfenahme des Zertifikats B und des entsprechenden Schlüsselpaar durchzuführen.

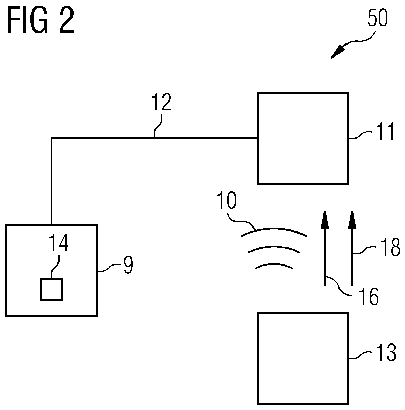

Fig. 2 illustriert in schematischer Weise ein Kommunikationssystem 50 gemäß einer Ausführungsform der vorliegenden Erfindung, welches ein Gerät 9, eine Recheneinrichtung 11, die mit dem Gerät über ein Kommunikationsnetzwerk 12 verbunden ist, und eine Benutzereinheit 13 umfasst. Das Feldgerät 9 weist ein Identifikationskennzeichen 14 auf, welches mittels der Benutzereinheit 13 abgetastet werden kann. Die Benutzereinheit 13 übersendet dann die aus dem Identifikationskennzeichen 14 abgeleiteten Geräteidentifikationsdaten 16 an die Recheneinrichtung 11, beispielsweise durch Drahtlosübertragung 10. Dabei werden von der Benutzereinheit 13 auch Nutzeridentifikationsdaten 18, welche den autorisierten Nutzer identifizieren, an die Recheneinrichtung 11 übermittelt.

Gemäß Ausführungsformen der vorliegenden Erfindung wird vorgeschlagen, um das Anmelden bzw. Registrieren von Feldgeräten (z.B. Feldgerät 9) an ein spezifisches Cloud-System (z.B. MindSphere) bzw. an eine Recheneinrichtung 11 durch Verwendung von Verschlüsselungsmethodiken bzw. Schlüsseln und Zertifikaten zu schützen. Dabei wird im Laufe des Prozesses zunächst eine erste Verschlüsselungsmethodik bzw. ein erstes, generelles (z.B. durch Geräthersteller-Zertifizierungsstelle signiertes) Zertifikat A genutzt. Dieses wird im Laufe des Prozesses gegen eine zweite für den autorisierten Nutzer spezifische Verschlüsselungsmethodik bzw. ein benutzerspezifisches (z.B. durch Benutzer-Zertifizierungsstelle signiertes) Zertifikat B getauscht. Nach der Fertigung des Feldgerätes 9 im Verfahrensschritt 15 wird das Gerät in einer ersten Phase für die spätere Inbetriebsetzung in dem Kommunikationsnetzwerk bzw. der Cloud vorbereitet. Dazu wird das Gerät 9 zunächst mit einem generellen Zertifikat A ausgestattet (als ein Beispiel einer ersten Verschlüsselungsmethodik) und so konfiguriert und parametriert, dass es bei der Inbetriebsetzung eine Kommunikation zu der Recheneinrichtung 11 bzw. dem Cloud-System aufbauen kann und sich dort anmelden kann. Die Geräthersteller-Zertifizierungsstelle muss gemäß einer Ausführungsform als vertrauenswürdig bei dem Cloud-System hinterlegt sein, sodass die Verbindungsanfrage seitens des Geräts mittels Identifikation durch Zertifikat A honoriert wird.

Bei der Inbetriebnahme (siehe Verfahrensabschnitt 7 in Fig. 1) im Feld meldet sich das Gerät 9 zunächst unter Zuhilfenahme der ersten Verschlüsselungsmethodik bzw. mit Hilfe des Zertifikats A bei der Recheneinrichtung 11 bzw. bei dem Cloud-System an, um sich dort registrieren zu lassen. Die Recheneinrichtung 11 bzw. das Cloud-System erkennt aufgrund der verwendeten ersten Verschlüsselungsmethodik bzw. aufgrund des Zertifikats A das Gerät an, lässt die Kommunikation mit diesem Gerät zu und legt in einem gesicherten Quarantänebereich in der Recheneinrichtung 11 bzw. im Cloud-System ein Datenobjekt für das Gerät an. Datenobjekte in diesem Quarantänebereich können den Applikationen in dem Cloud-System bzw. der Recheneinrichtung 11 zunächst nicht zur Verfügung stehen. Die Datenobjekte können zunächst lediglich angelegt sein und darauf warten, in einen Bereich der Recheneinrichtung 11 (bzw. in einen Speicherbereich der Recheneinrichtung 11) geschoben zu werden, der eindeutig einem autorisierten Nutzer bzw. Mandanten zugeordnet ist, und auf den die im Cloud-Dienst ablaufenden Applikationen bzw. in der Recheneinrichtung 11 ablaufenden Applikationen zugreifen können.

Ein Inbetriebsetzungs-Techniker kann in dem Verfahrensschritt 27 ein eindeutiges Kennzeichen des Gerätes 9 mit einer Benutzereinheit (z.B. mobiles Gerät) aufnehmen, z.B. durch Scannen eines QR-Codes, kann Daten mit seinem eigenen Zertifikat (bzw. mit einer eigenen Verschlüsselungsmethodik) verschlüsseln und kann sie an die Recheneinrichtung bzw. die Cloud senden.

Nachdem das Datenobjekt, welches das Gerät 9 betrifft, in den richtigen Speicherbereich bzw. den dem autorisierten Nutzer zugeordneten Speicherbereich verschoben wurde, veranlasst die Recheneinrichtung 11 bzw. das Cloud-System einen Austausch der ersten Verschlüsselungsmethodik durch eine zweite Verschlüsselungsmethodik bzw. veranlasst einen Zertifikataustausch für das Gerät 9. Dazu wird eine Definition bzw. Information über die zweite Verschlüsselungsmethodik bzw. ein zweites Zertifikat B (und ein entsprechendes Schlüsselpaar) an das Gerät 9 gesendet, das spezifisch für den autorisierten Nutzer ist bzw. das dem entsprechenden Mandanten gehört. Das Gerät erkennt aufgrund der ersten Verschlüsselungsmethodik bzw. aufgrund des ersten Zertifikats A die Gültigkeit der zweiten Verschlüsselungsmethodik bzw. die Gültigkeit des Zertifikats B an und tauscht die erste Verschlüsselungsmethodik gegen die zweite Verschlüsselungsmethodik bzw. tauscht das Zertifikat A (und das entsprechende Schlüsselpaar) gegen das Zertifikat B (und das entsprechende Schlüsselpaar) aus. Der Prozess des Zertifikatstauschs bzw. Tauschs der Verschlüsselungsmethodiken kann entweder direkt aus dem Cloud-System oder aus einem vom Cloud-System verbundenen Verwaltungssystem für Zertifikate erfolgen.

Fortan wird die Kommunikation zwischen dem Gerät und der Recheneinrichtung 11 bzw. dem Cloud-System nur noch unter Verwendung der zweiten Verschlüsselungsmethodik durchgeführt bzw. nur noch mit dem Zertifikat B verschlüsselt.

Alternativ kann vorgesehen sein, dass zunächst die Verschlüsselungsmethodik ausgetauscht wird bzw. das Zertifikat ausgetauscht wird und danach das Datenobjekt aus dem Quarantänebereich in den benutzerspezifischen Bereich geschoben wird.

Gemäß einer Ausführungsform der vorliegenden Erfindung ist weiter vorgesehen, dass in der Vorbereitung der Inbetriebsetzung unterschieden wird zwischen Geräten, für die bekannt ist, welchem autorisierten Nutzer sie zugeordnet sind und Geräten, über denen dies bei der Vorbereitung noch nicht bekannt ist.

Wenn in der Vorbereitung bereits bekannt ist, welchem autorisierten Benutzer bzw. Mandanten das Gerät später gehören wird, wird das Gerät zusätzlich mit einer Kennung versehen, die spezifisch für diesen autorisierten Benutzer bzw. den Mandanten ist (siehe optionalen Verfahrensschritt 21 in Fig. 1). Das Gerät 9 kann diese Kennung zusätzlich bei der ersten Anmeldung (siehe Verfahrensschritt 23 in Fig. 1) bei der Recheneinrichtung 11 bzw. dem Cloud-Dienst verwenden bzw. versenden. Die Recheneinrichtung 11 bzw. der Cloud-Dienst kann diese Information nutzen, um das Datenobjekt für das Gerät in einem für den autorisierten Nutzer reservierten Quarantänebereich anlegen, der ausschließlich für den autorisierten Benutzer bzw. den Mandanten reserviert ist. In diesem Bereich können sich Datenobjekte weiterer Geräte befinden, die diesem Nutzer bzw. dem Mandanten zugeordnet sind.

Falls das Gerät sich ohne spezifischen Mandanten bzw. Nutzerkennung anmeldet, wird es wie oben beschrieben in einen allgemeinen Quarantänebereich geschoben, in dem sich Geräte verschiedener Mandanten bzw. Nutzer befinden können.

Ausführungsformen der vorliegenden Erfindung können folgende Vorteile bzw. Merkmale bereitstellen:
Das Verfahren kann ein einfaches und schnelles Anmelden eines Feldgerätes bei einer Recheneinrichtung bzw. einem Cloud-Dienst mit einem Minimum an Bedienungsaufwand erlauben. Zu jeder Zeit kann eine durch asymmetrische Schlüssel und Zertifikate oder andere Verschlüsselungsmethoden abgesicherte Kommunikation zwischen dem Feldgerät und der Recheneinrichtung bzw. dem Cloud-Dienst erfolgen. Es können sowohl Feldgeräte bei der Recheneinrichtung 11 bzw. dem Cloud-Dienst angemeldet werden, bei denen zum Zeitpunkt der Vorbereitung der Inbetriebsetzung bekannt ist, zu welchem Nutzer sie zugeordnet werden müssen, als auch Feldgeräte, bei denen dies nicht bekannt ist. Die Vorbereitung der Inbetriebsetzung kann von verschiedenen Nutzergruppen in Herstellungs-, in Lieferungs- und Inbetriebsetzungsprozessen vorgenommen werden. Die Vorbereitung kann im Werk während der Fertigung erfolgen, bei einem Value-added-Reseller oder in der Arbeitsvorbereitung des Endkunden.

## Patentansprüche

1. Verfahren eines Registrierens (7) eines Gerätes (9) bei einer verbundenen Recheneinrichtung (11), aufweisend:
Registrieren (23, 25) des Geräts bei der Recheneinrichtung unter Verwendung einer ersten Verschlüsselungsmethodik;
Definieren, bei der Recheneinrichtung (11), einer nutzerspezifischen und gerätespezifischen zweiten Verschlüsselungsmethodik basierend auf Gerätidentifikationsdaten (16) und Nutzeridentifikationsdaten (18);
Kommunizieren (31) der zweiten Verschlüsselungsmethodik von der Recheneinrichtung (11) an das Gerät (9) für zukünftige Kommunikation.

2. Verfahren gemäß Anspruch 1, ferner aufweisend, falls beim Registrieren keine Nutzeridentifikationsdaten (18) von dem Gerät an die Recheneinrichtung übertragen wurden:
Verhindern jeder Kommunikation eines jeglichen Nutzers mit dem Gerät (9) über die Recheneinrichtung (11).

3. Verfahren gemäß einem der vorangehenden Ansprüche, wobei das Registrieren ein Übertragen von Gerätidentifikationsdaten (16), die das Gerät (9) identifizieren, mittels der Benutzereinheit (13) an die Recheneinrichtung (11) umfasst.

4. Verfahren gemäß einem der vorangehenden Ansprüche, ferner aufweisend:
Erfassen, bei dem Gerät, der Gerätidentifikationsdaten (16), die das Gerät (9) identifizieren;
Übermitteln (27) der Gerätidentifikationsdaten (16) zusammen mit Nutzeridentifikationsdaten (18), die einen autorisierten Nutzer identifizieren, an die Recheneinrichtung (11).

5. Verfahren gemäß dem vorangehenden Anspruch, wobei das Erfassen der Gerätidentifikationsdaten (16) ein Abtasten eines an dem Gerät (11) angebrachten Codes (14), insbesondere QR-codes, umfasst.

6. Verfahren gemäß einem der zwei vorangehenden Ansprüche, wobei die Gerätidentifikationsdaten (16) von einer mobilen Benutzer-Einheit (13), insbesondere Smartmobiltelefon, erfasst und zusammen mit den Nutzeridentifikationsdaten (18), die insbesondere auf der Benutzer-Einheit gespeichert sind, an die Recheneinrichtung (11) übermittelt werden.

7. Verfahren gemäß einem der vorangehenden Ansprüche, ferner aufweisend:
Ermöglichen einer Kommunikation des autorisierten Nutzers mit dem Gerät (9) über die Recheneinrichtung (11) unter Benutzung der zweiten Verschlüsselungsmethodik;
Verhindern jeder Kommunikation eines von dem autorisierten Nutzer verschiedenen Nutzers mit dem Gerät über die Recheneinrichtung.

8. Verfahren gemäß dem vorangehenden Anspruch,
wobei das Ermöglichen der Kommunikation des autorisierten Nutzers mit dem Gerät (9) über die Recheneinrichtung (11) umfasst:
Konfigurieren (33) des Gerätes (9), künftig ausschließlich unter Benutzung der zweiten Verschlüsselungsmethodik mit der Recheneinrichtung (11) und/oder dem autorisierten Nutzer zu kommunizieren.

9. Verfahren gemäß einem der vorangehenden Ansprüche, ferner aufweisend vor dem Registrieren:
Vorbereiten (5) des Gerätes zur verschlüsselten Kommunikation mit der Recheneinrichtung einschließlich Ausstatten (19) des Gerätes (9) mit der ersten Verschlüsselungsmethodik.

10. Verfahren gemäß dem vorangehenden Anspruch, wobei das Vorbereiten (5) des Gerätes ferner umfasst:
Hinterlegen (21) der Nutzeridentifikationsdaten oder Nutzergruppenidentifikationsdaten auf dem Gerät (9), die einen autorisierten Nutzer identifizieren,
wobei das Registrieren eine Übertragung der Nutzeridentifikationsdaten von dem Gerät an die Recheneinrichtung umfasst.

11. Verfahren gemäß einem der vorangehenden Ansprüche, wobei die erste Verschlüsselungsmethodik und die zweite Verschlüsselungsmethodik beide dasselbe, insbesondere symmetrische oder asymmetrische, Verschlüsselungsverfahren verwenden, jedoch verschiedene Schlüssel und/oder ein erstes Zertifikat bzw. ein zweites Zertifikat.

12. Verfahren gemäß einem der vorangehenden Ansprüche, wobei das Verfahren nach dem Registrieren ferner umfasst:
Parametrieren und/oder Konfigurieren des Gerätes (9) unter Benutzung der zweiten Verschlüsselungsmethodik von der Recheneinrichtung (11) aus, insbesondere in Zusammenwirken mit der Benutzer-Einheit (13).

13. Verfahren gemäß einem der vorangehenden Ansprüche, wobei das Gerät (9) ein elektrisches Gerät umfasst, insbesondere eines der folgenden:
einen Sensor, einen Aktor, ein Messgerät, ein Schutzgerät, ein Steuergerät, ein Kommunikationsgerät, einen Schalter.

14. Verfahren gemäß einem der vorangehenden Ansprüche, wobei das Kommunikationsnetzwerk und/oder die Recheneinrichtung zur Steuerung und/oder Überwachung und/oder Automatisierung eines elektrischen Energieversorgungsnetzwerkes oder anderer elektrischer Anlagen ausgebildet ist.

15. System (50), aufweisend:
ein Gerät (9); und
eine Recheneinrichtung (11), die mit dem Gerät über ein Kommunikationsnetzwerk (12) verbunden ist,
wobei das Gerät ausgebildet ist,
sich bei der Recheneinrichtung (11) unter Verwendung einer ersten Verschlüsselungsmethodik zu registrieren;
wobei die Recheneinrichtung (11) ausgebildet ist,
eine nutzerspezifische und gerätespezifische zweite Verschlüsselungsmethodik basierend auf Gerätidentifikationsdaten (16) und Nutzeridentifikationsdaten (18) zu definieren; und
die zweite Verschlüsselungsmethodik für zukünftige Kommunikation an das Gerät (9) zu kommunizieren.

16. System gemäß dem vorangehenden Anspruch, ferner aufweisend:
eine, insbesondere mobile, Benutzer-Einheit (13), insbesondere Smartmobiltelefon, die ausgebildet ist, Gerätidentifikationsdaten (16) des Gerätes (9) zu erfassen und zusammen mit Nutzeridentifikationsdaten (18) an die Recheneinrichtung (11) zu übermitteln.

17. Energieversorgungsnetzwerk, aufweisend:
ein System gemäß einem der zwei vorangehenden Ansprüche; und
ein Starkstromnetzwerk zur Energieversorgung mehrerer Konsumenten,
wobei das Gerät des Systems zur Steuerung und/oder Überwachung und/oder Automatisierung mit dem Starkstromnetzwerk verbunden ist.
